# EUROPEAN PATENT SPECIFICATION

(11) **EP 2 800 363 B1**
(45) Date of publication and mention of the grant of the patent: **03.07.2019**
(21) Application number: 12862365.9
(22) Date of filing: 21.11.2012
(51) Int. Cl.: H04N 5/91, G11B 27/00, H04N 5/765, H04N 9/82, H04N 21/488, H04N 21/81, H04N 21/845, H04N 21/658, G11B 27/10

(54) **RECORDING DEVICE FOR MOVING IMAGE DATA, AND MESSAGE DISPLAY METHOD**
AUFZEICHNUNGSVORRICHTUNG FÜR DATEN IN FORM BEWEGTER BILDER UND NACHRICHTENANZEIGEVERFAHREN
DISPOSITIF D'ENREGISTREMENT POUR DONNÉES D'IMAGES EN MOUVEMENT, ET PROCÉDÉ D'AFFICHAGE DE MESSAGE

(30) Priority: 28.12.2011 JP 2011287390
(43) Date of publication of application: 05.11.2014
(73) Proprietor: Panasonic Corporation, Kadoma-shi, Osaka 571-8501 (JP)
(72) Inventor: HARIO, Shota, Osaka 540-6207 (JP); KOZUKI, Masafumi, Osaka 540-6207 (JP); SATO, Kazuki, Osaka 540-6207 (JP); TANIKAWA, Kentaro, Osaka 540-6207 (JP)
(74) Representative: Eisenführ Speiser
(86) International application number: PCT/JP2012/007497
(87) International publication number: WO 2013/099100

(56) References cited:
- WO-A1-2007/148777
- JP-A- 2003 061 036
- JP-A- 2004 274 287
- US-A1- 2007 077 040
- US-A1- 2009 297 130
- US-A1- 2009 317 064

## Description

### Technical Field

The present disclosure relates to a recording device of moving image data, and more particularly to a recording device which requests scene data related to recorded moving image data from an external device.

### Background Art

Japanese Patent application JP 2011-223205 discloses a broadcast recording device. This broadcast recording device determines whether or not predetermined characters are included in broadcast data. The broadcast recording device divides chapters of broadcast data when determining that predetermined characters are included in the broadcast data. According to this configuration, it is possible to automatically divide broadcast data into chapters at positions at which content starts.

US patent application US 2007/0077040 A1 discloses a reproducing apparatus having a function to recover synchronization and a function to display information. The first function resumes synchronous reproduction automatically even though synchronous reproduction is interrupted. The second function Jets the user know what is going on in the reproducing apparatus when synchronous reproduction is interrupted.

US patent application US 2009/0317064 A1 discloses a playback apparatus, a method, and a program which can appropriately perform jump playback when content transmitted through a network is played back in real time. A terminal receives stream data transmitted from a server, buffers the stream data, and plays back the buffered data. The terminal has multiple buffers to allow content data of the positions of jump destinations that can be specified as a jump destination during jump playback to be pre-buffered in the multiple buffers. As a result, upon receiving a request for jump playback, the terminal can start playback from a jump destination without delay, since the data of the jump destination has already been buffered.

### Summary of Invention

### Problems to be Solved by the Invention

When chapters are automatically added, the automatically added chapters are not necessarily added to positions at which chapters originally need to be added. Depending on cases, there are also cases where chapters may be added to positions at which chapters should not be added.

There is also a method of manually allocating chapters per scene while a predetermined operator is looking at a video image to add chapters to more correct positions. Information including chapters manually added per scene by such a predetermined operator is provided as scene data on a server, so that a broadcast recording device can acquire the scene data from the server through the Internet.

An object of the present disclosure is to provide a recording device which receives scene data from an external device and can notify a user of a possibility of adding scene data.

### Means for Solving the Problem

A recording device of the present disclosure is provided for recording moving image data including data for a broadcasted program, that receives, from a server, scene data of the broadcasted program which is created within a predetermined time after the broadcasted program is broadcasted, and includes a recording unit that records moving image data in the recording medium, a transmitting unit that transmits a request signal f or requesting the scene data to the server when the moving image data is a broadcasted program data, the scene data being information in which a mark r indicating a time position at which the scene changes is added for each of scenes in relation to the moving image data recorded in the recording medium, a receiving unit that receives a response signal in response to the request signal from the server, the response signal including scene data or information indicating no scene data, and an output unit that outputs image data indicating a message when the receiving unit cannot receive the scene data in response to the request signal from the server. The message to be displayed is selected depending on (i) whether the moving image data is not a broadcasted program, or (ii) whether the moving image data is a broadcasted program data, and whether a predetermined time has passed from a time at which the moving image data was recorded in the recording medium.

A message display method of the present disclosure is a message display method of displaying a message in response to a response result when scene data related to moving image data of a broadcasted program is requested to a server. The scene data is created within a predetermined time after the broadcasted program is broadcasted, the scene data is information in which a mark indicating a time position at which the scene changes is added for each of scenes of the moving image data. The message display method includes transmitting to the server a request signal for requesting scene data related to specific moving image data recorded in a recording medium when the specific moving image data is a broadcasted program data, outputting image data indicating a message when the scene data in response to the request signal cannot be received from the server, and changing the message according to (i) whether the moving image data is not a broadcasted program data or (ii) whether the moving image data is a broadcasted program data and whether a predetermined time has passed since the moving image data was recorded in the recording medium.

A computer program of the present disclosure is a program of controlling a recording device which records scene data related to moving image data of a broadcasted program. The scene data is created within a predetermined time after the broadcasted program is broadcasted, the scene data is information in which a mark indicating a time position at which the scene changes is added for each of scenes of the moving image data. The computer program makes a controller of the recording device execute the following functions: a function of transmitting to a server a request signal for requesting scene data related to specific moving image data recorded in a recording medium, when the specific moving image data is a broadcasted program data; a function of outputting image data indicating a message when the scene data in response to the request signal cannot be received from the server; and a function of changing the message according to (i) whether the moving image data is not a broadcasted program data or (ii) whether the moving image data is a broadcasted program data and whether a predetermined time has passed since the moving image data was recorded in the recording medium.

### Effects of the Invention

According to the present disclosure, it is possible to provide a recording device which, in cases where scene data is generated within a predetermined time after a program corresponding to moving image data (program data) is broadcasted, can notify a user of a possibility of allocating scene data to the moving image data.

### Brief Description of Drawings

Fig. 1 is a schematic diagram illustrating an entire system.
Fig. 2 is a block diagram illustrating configurations of a recorder and a remote controller.
Figs. 3A and 3B are schematic diagrams for explaining chapter information for managing an automatically added chapter.
Figs. 4A to 4C are schematic diagrams for explaining scene data.
Fig. 5 is a flowchart illustrating a chapter allocating operation.
Fig. 6 is a view explaining that chapter information related to an automatically added chapter and chapter information based on scene data received from a server are recorded in different recording media.
FIG. 7 is a flowchart for explaining scene data acquiring operation.
Fig. 8 is a schematic diagram for explaining an example of a displayed screen.
Fig. 9 is a schematic diagram for explaining an example of a displayed screen.
Fig. 10 is a view explaining that chapter information related to an automatically added chapter and chapter information based on scene data received from a server are recorded in the same recording medium.
Fig. 11 is a flowchart for explaining a playback operation.

### Mode for Carrying Out the Invention

A first embodiment which uses a recorder as an example of a recording device will be described below with reference to the drawings.

The embodiment will be described in detail below adequately referring to the drawings. Meanwhile, detailed description will not be described more than necessary. For example, detailed description of matters which have already been well known and overlapping description of substantially the same components will not be described. This is to prevent the following description from being redundant more than necessary and make understanding of one of ordinary skill in the art easy.

In addition, the inventor(s) provides the accompanying drawings and the following description to allow one of ordinary skill in the art to sufficiently understand the present disclosure, and by no means intends to limit a subject matter recited in the claims.

### First Embodiment

### 1-1. Outline

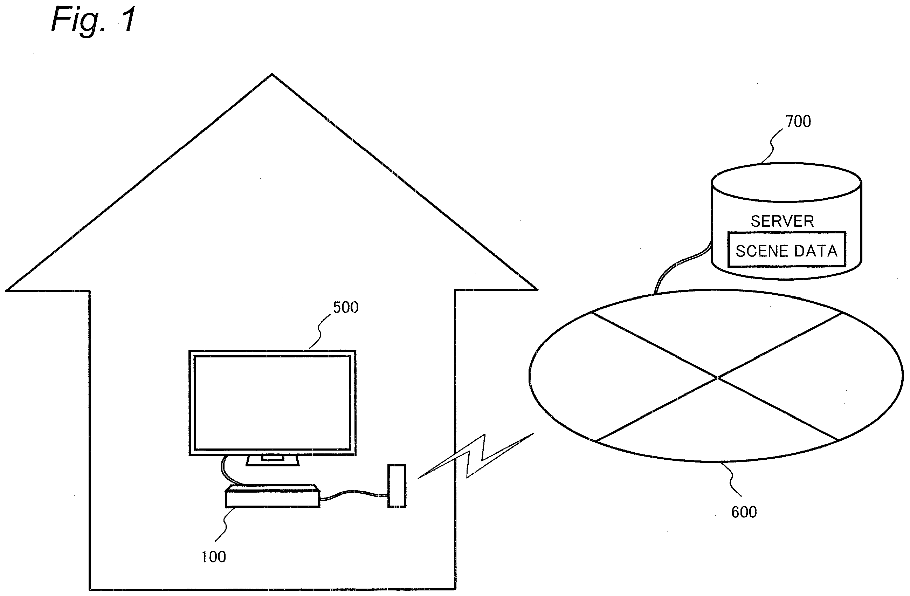

An entire configuration of a recording system including a recorder according to the present embodiment will be described with reference to Fig. 1. This recording system includes a recorder 100, a television 500 and a server 700. The recorder 100 can communicate with the server 700 through an Internet 600.

The server 700 stores scene data. The scene data is information indicating content (features) of a program for each of scenes. The scene data is created by a predetermined operator who actually views a program indicated by program data, judges content of the program, and manually adds the scene data for each scene. For example, for a program which starts at 00:00, scene data indicating that a scene at 00:00 to 00:10 is an opening of a drama, scene data indicating that a scene of 00:10 to 00:11 is a commercial message of a beer, and scene data indicating that a scene of 00:11 to 00:12 is a commercial message of a supermarket, are created respectively. The scene data includes a chapter indicating a scene change point. That is, a chapter is added to a point at which scenes switch.

The recorder 100 can acquire scene data related to program data to be played back from the server 700 through the Internet 600. The recorder 100 generates chapter information from the acquired scene data upon acquisition of scene data. The recorder 100 can execute skip playback on the basis of the chapter information. Here, the skip playback is an operation of changing a playback position on the basis of chapter managed by chapter information included in the scene data.

Further, the recorder 100 can receive broadcast. The recorder 100 can record program data generated on the basis of the received broadcast, in an internal hard disk. When recording program data, the recorder 100 automatically adds chapters to program data when predetermined conditions (e.g. start/end of commercial messages) are satisfied. At that time, the recorder 100 generates chapter information which manages automatically added chapters. The recorder 100 can execute skip playback on the basis of the chapter information for managing the automatically added chapters.

As described above, chapters which are scene change points include two types of chapters including a chapter generated on the basis of scene data and a chapter automatically added on the basis of the predetermined conditions. Thus, a plurality of types of chapters are likely to be added to one piece of program data. In this case, when a skip playback command is received from a user, it is difficult to determine which type of chapter indicates a position to which a playback position is changed. That is, there is a problem that it is not possible to distinguish between skip playback based on a chapter (chapter information) generated on the basis of scene data and skip playback based on a chapter (chapter information) automatically added on the basis of the predetermined condition and to execute them apart.

The recorder 100 according to the present embodiment can solve such a problem. Even when a plurality of types of chapters are mixed and added to one program data, the recorder 100 can execute apart the skip playback based on a chapter generated on the basis of scene data and the skip playback based on an automatically added chapter.

### 1-2. Configurations of Recorder and Remote Controller

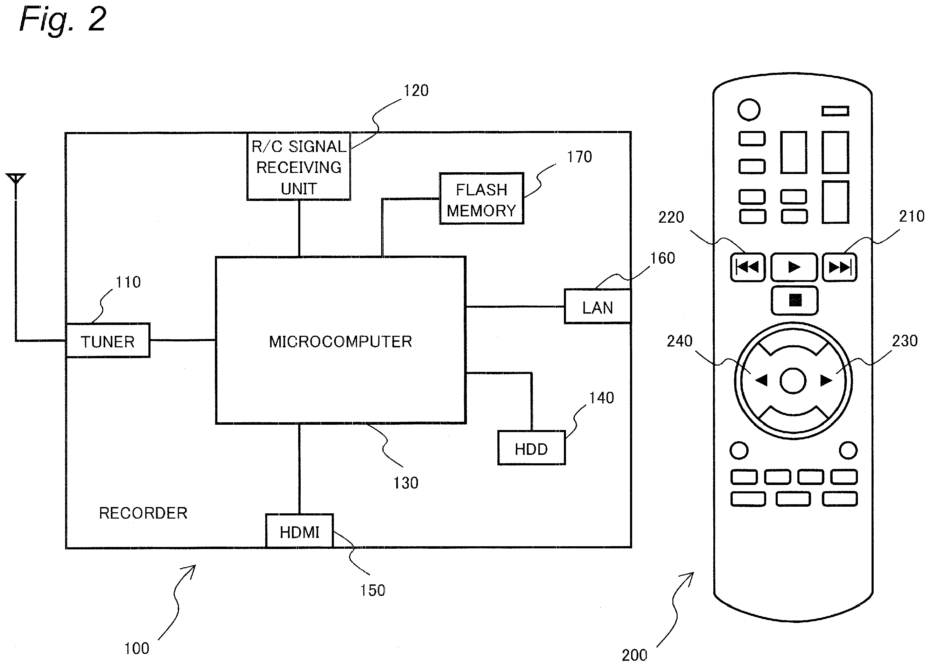

Configurations of the recorder 100 and a remote controller 200 will be described with reference to Fig. 2. Fig. 2 is a view illustrating the configurations of the recorder 100 and the remote controller 200. The recorder 100 applies with a microcomputer 130 various types of processing to broadcast data received by a tuner 110 according to a command from a user through the remote controller 200 to generate program data, and records the generated program data in a HDD 140. The recorder 100 transmits program data recorded in the HDD 140, to an external device through a HDMI 150. Each of components will be described in detail below.

In the recorder 100, the tuner 110 extracts broadcast data of a channel selected by the user from broadcast data received through an antenna. The tuner 110 generates digital data which can be processed by the microcomputer 130 on the basis of the extracted broadcast data.

A remote control signal receiving unit 120 receives a control signal modulated to an infrared ray or an RF wave transmitted from the remote controller 200. For example, the remote control signal receiving unit 120 receives control signals of power ON/OFF, channel selection, playback start/stop, skip playback, and so on. The remote control signal receiving unit 120 converts the received control signal into a digital signal which the microcomputer 130 can interpret.

The microcomputer 130 is a control module which controls entirely the recorder 100. The microcomputer 130 is made by a SOC (System On Chip) . Hence, the microcomputer 130 is made integrally with a CPU, a memory, and a data signal processing circuit.

The HDD 140 is a storage device which stores moving image data and the like. The HDD 140 stores program data indicating a broadcast program received through the tuner 110, chapter information which is information related to chapters automatically added to the program data, and the like.

The HDMI 150 is an interface which connects the recorder 100 and the external device such as the television 500. The recorder 100 outputs program data indicated by a broadcast program stored in the HDD 140, and so on to the external device (e.g. a television 500) through the HDMI 150.

A wired LAN module 160 is an interface which can be connected with a LAN cable. The recorder 100 can be connected to the Internet through the LAN cable by the wired LAN module 160.

A flash memory 170 is a recording medium which stores a control program of the recorder 100, scene data received from an outside through the wired LAN module 160, and so on. The flash memory 170 stores chapter information related to chapters generated on the basis of scene data, too.

The remote controller 200 includes buttons 210, 220, 230 and 240 pushed by the user to command the recorder 100 to execute a predetermined function. The button 210 is a button for skipping program data which is being played back, in a forward direction. The skip commanded by the button 210 is executed on the basis of a chapter automatically added by the recorder 100. A button 220 is a button for skipping program data which is being played back, in a backward direction. The skip commanded by the button 220 is executed based on chapters automatically added by the recorder 100. The button 230 is a button for skipping program data which is being played back, in the forward direction. The skip commanded by the button 230 is executed on the basis of chapters generated from scene data acquired from an outside through the wired LAN module 160. The button 240 is a button for skipping program data which is being played back, in the backward direction. The skip commanded by the button 240 is executed on the basis of scene data acquired from the outside through the wired LAN module 160. As described above, in the present embodiment, the skip based on an automatically added chapter and the skip based on a chapter generated on the basis of scene data are commanded by different operation buttons (210 and 220, and 240 and 240).

### 1-3. Chapter Information and Scene data

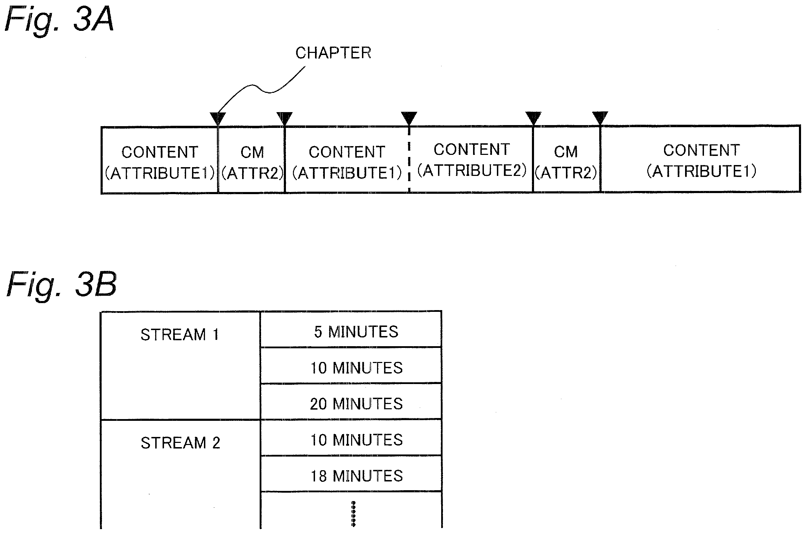

Figs. 3A and 3B are views for explaining chapter information for managing automatically added chapters. As illustrated in Fig. 3A, the chapter is sequentially added to a position (change point) at which attribute of program data (video stream) changes. For example, the chapter is added to time point at which content switches to a CM (Commercial Message), time point at which the contents switches, and time point at which a CM switches to the content.

Fig. 3B is a view explaining a configuration example of chapter information. As illustrated in Fig. 3B, information indicating a playback time to which a chapter is added is associated with program data (video stream), in the chapter information. The playback time to which a chapter is added is information indicating a relative time position, using a playback start time of each program data as a reference time (0) . Information indicating "5 minutes" of a stream 1 illustrated in Fig. 3B indicates that a chapter is added to a time position of five minutes elapsing from the playback start time of the stream 1, and information indicating "10 minutes" indicates that a chapter is added to a time position of 10 minutes elapsing from the playback start time of the stream 1.

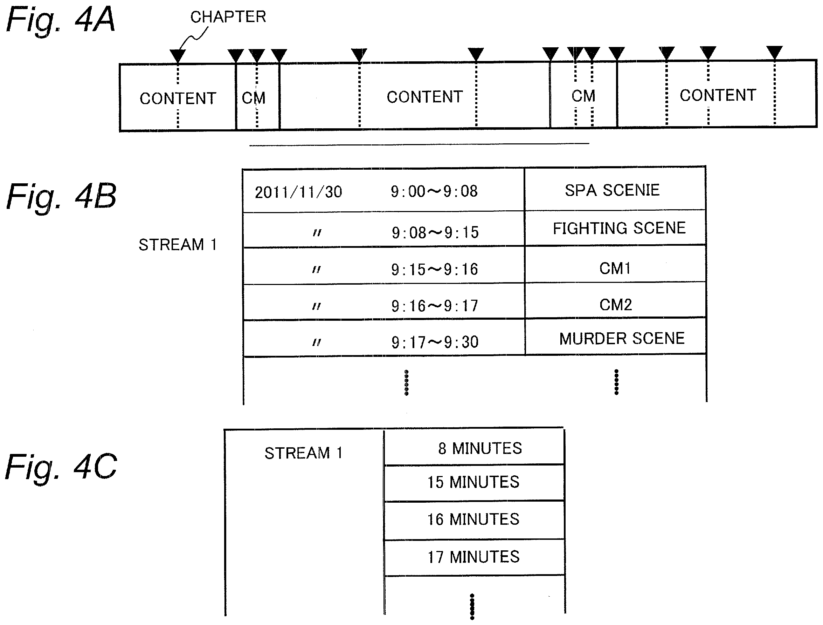

Figs. 4A to 4C are views for explaining the scene data. Fig. 4B illustrates an example configuration of the scene data received by the microcomputer 130 of the recorder 100. The scene data is configured by information indicating a start time, an end time and scene content related to each scene in program data, and a start time, an end time and CM content of each CM. The scene data is information generated by the predetermined operator viewing a program indicated by target program data. Hence, the chapter can be added not only to a boundary between a content portion and a CM portion in a program, but also to a switching point of scenes in the content portion and a boundary at which a type of CM changes. That is, as illustrated in Fig 4A, the chapter is added to a point at which scenes and CMs change in the scene data. Time information indicating a start time and an end time of each scene and each CM in the scene data is information indicating an actual time (absolute time) at which the associating program data is broadcasted. When the scene data is received from the server 700, the chapter information (see Fig. 4C) indicating a chapter position with a relative time position is generated on the basis of the scene data.

### 1-4. Chapter Automatic Allocating Operation

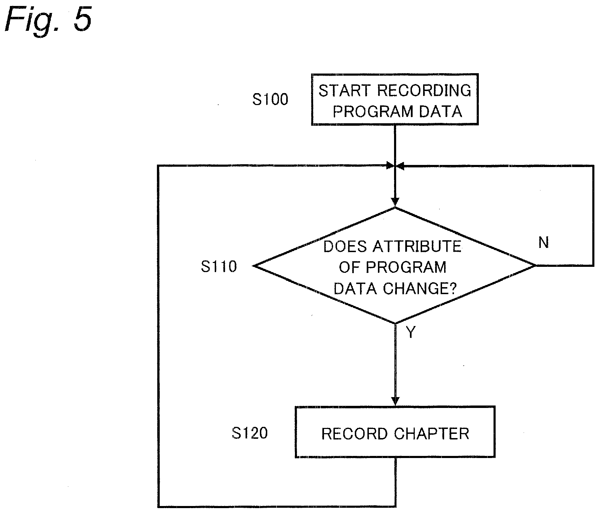

As described above, in the present embodiment, there are two types of chapters which are change points of scenes including the chapter generated on the basis of the scene data, and the chapter automatically added on the basis of the predetermined condition. An operation of the recorder 100 of automatically allocating chapters on the basis of the predetermined condition will be described below with reference to Fig. 5.

Fig. 5 is a flowchart for explaining an automatic chapter allocating operation.

In the flowchart in Fig. 5, when a record command is received from the user, the microcomputer 130 of the recorder 100 starts recording program data generated on the basis of broadcast data received through the tuner 100, in the HDD 140 (S100) . When recording of the program data starts, the microcomputer 130 determines whether or not an attribute of the recorded program data (video stream) changes (S110) . For example, the microcomputer 130 determines whether or not an audio signal of the program data changes from a monaural sound to a stereo sound or vice versa. When determining that the attribute changes, the microcomputer 130 records management data corresponding to the program data which is being recorded (information indicating a time position (change point) at which the attribute changes in chapter information), as chapters, in the HDD 140 (S120). For example, as illustrated in Fig. 3A, a chapter is sequentially added to a position (switch point) at which attribute of program data (video stream) changes. In the present embodiment, the management data is recorded in the HDD 140.

When recording of the program data in the HDD 140 is finished, chapter information related to program data as illustrated in Fig. 3B is generated. The recorder 100 can execute skip playback by referring to chapter information stored in the HDD 140 when playing back program data.

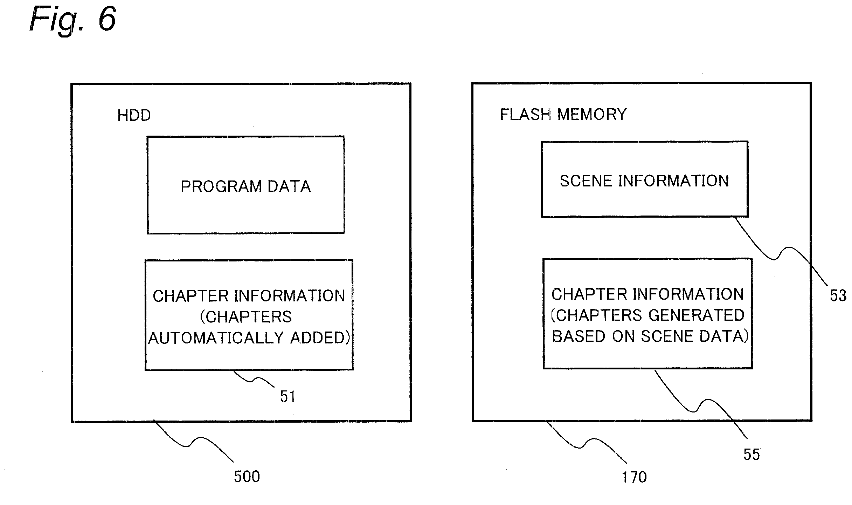

As described above, when the program data is recorded, chapters are automatically added to program data. As illustrated in Fig. 6, chapter information 51 for managing chapters automatically added is recorded in the HDD 500.

### 1-5. Acquiring Operation of Scene data

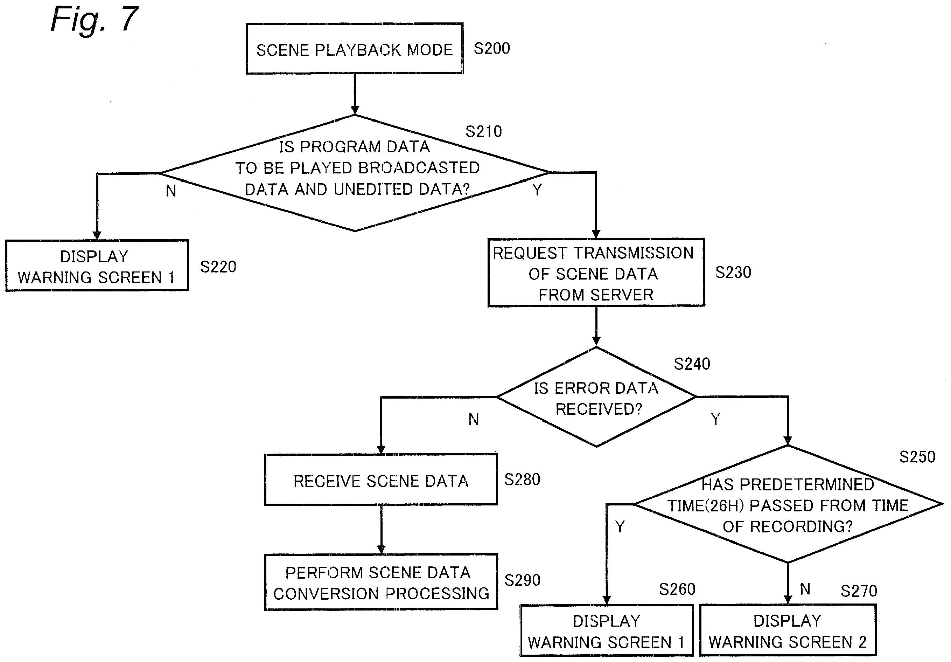

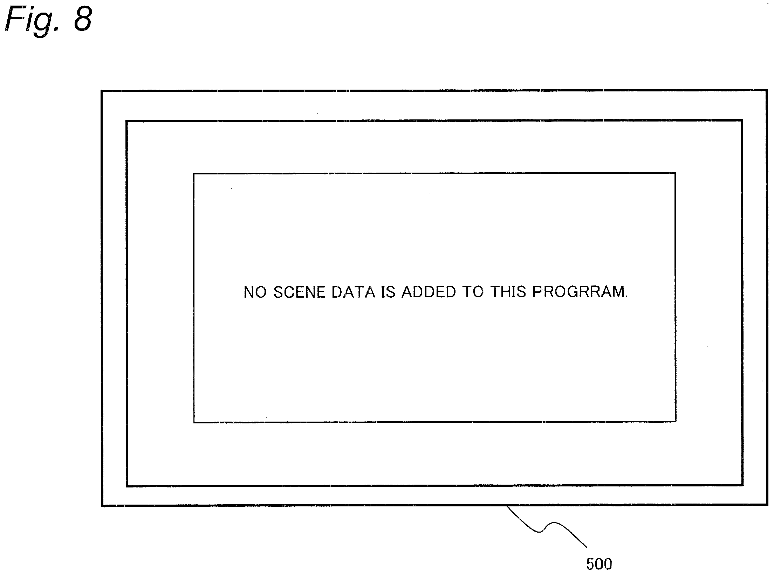

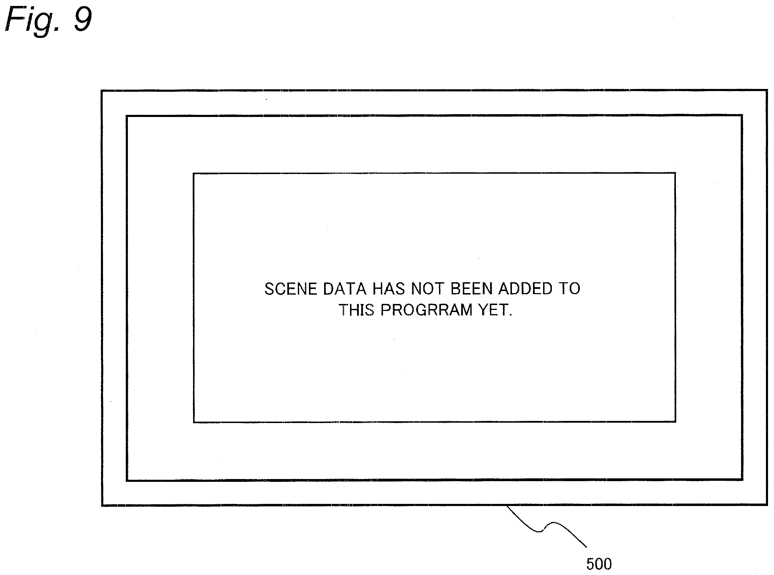

Next, an operation of the recorder 100 for acquiring scene data from the server 700 will be described with reference to Figs. 7 to 9. Fig. 7 is a flowchart for explaining an operation of acquiring scene data. Fig. 8 is a schematic diagram for explaining an example of a warning screen 1. Fig. 9 is a schematic diagram for explaining an example of a warning screen 2.

A "scene playback mode" described below refers to a playback mode of executing skip playback of program data using scene data. Program data to be played is program data stored in advance in the HDD 140.

When the program data to be played is selected by the user while the scene playback mode is set (S200), the microcomputer 130 of the recorder 100 determines whether or not the selected program data is program data generated on the basis of broadcast data received through the tuner 110 and unedited program data (S210). This determination is performed because scene data of video data (e.g. video data shot by the user with a video camera) which is not a broadcasted program is not stored in the server 700. Further, scene data corresponding to edited program data is not stored in the server 700.

When determining in step S210 that the selected program data is not broadcasted program data or is edited program data, the microcomputer 130 controls the HDMI 150 to output image data indicating a message (warning screen 1) as illustrated in Fig. 8 (S220). The message included in this warning screen 1 is a message which notifies the user that scene data is not added to program data selected as a program data to be played even in the future.

Meanwhile, when determining in step S210 that the selected program data is broadcasted program data and unedited data, the microcomputer 130 transmits a scene data request command to the server 700 through the wired LAN module 160 (S230).

When receiving the command of requesting scene data, the server 700 determines whether or not there is scene data corresponding to the program data to be played in the server 700. When determining that there is not the scene data, the server 700 transmits error data to the recorder 100 as a response to the scene data request command. The error data indicates that there is no requested scene data on the server 700.

When receiving the error data (YES in S240), the microcomputer 130 of the recorder 100 determines whether or not a predetermined time (e.g. 26 hours) has passed after recording of the program data to be played (S250). When it is determined that the predetermined time (e.g. twenty-six hours) passes, the microcomputer 130 controls the HEMI 150 to output image data indicating the warning screen 1 (S260). Meanwhile, when determining that the predetermined time (e.g. twenty-six hours) does not pass, the microcomputer 130 controls the HDMI 150 to output image data indicating a message (warning screen 2) as illustrated in Fig. 9 (S270). A message included in this warning screen 2 is a message which notifies the user that scene data is not added to program data selected as program data to be played, that is, there is a possibility of allocating scene data to selected program data in the future.

The reason for determining whether or not the predetermined time (e.g. 26 hours) passes in step S250 is described below. Scene data is manually created for each scene by the predetermined operator who actually views a program and determines content of the program. It takes time to create the scene data, and therefore a certain time for preparing the scene data is secured after the program is broadcasted. In the present embodiment, when scene data of a broadcasted program is created, scene data is created within the predetermined time (e.g. 26 hours) from a time at which a scene is broadcasted. In view of such matter, in step S250, it is determined whether or not the predetermined time (e.g. 26 hours) passes from a time of the recording in order to determine whether or not there is a possibility of creating scene data for this program.

Although, in step S250, a reference time for the elapsed time is a time at which the program data to be played is recorded, the reference time for the elapsed time is not limited to this. A time shifted forward or backward from a time at which the program data to be played is recorded may be used as the reference time. That is, a time which can be associated with a broadcast time of a scene can be used as the reference time.

Meanwhile, in step S240, when there is scene data in the server 700, the server 700 transmits scene data to the recorder 100 (NO in S240). The microcomputer 130 of the recorder 100 receives the scene data through the wired LAN module 160 (S280).

The microcomputer 130 of the recorder 100 executes processing of converting the received scene data to generate chapter information and records the generated chapter information with the received scene data in the flash memory 170 (S290). More specifically, in the converting processing, information (see Fig. 4B) indicating an absolute recording time of a chapter is converted into a relative time (see Fig. 4C) with respect to a playback start position.

Thus, in the present embodiment, as illustrated in Fig. 6, the scene data 53 received from the server 700 and chapter information 55 generated from the scene data are recorded in the flash memory 170.

As described above, the recorder 100 according to the present embodiment distinguishes between chapter information (first chapter information) related to a chapter automatically added and chapter information (second chapter information) based on the scene data and record them apart. That is, as illustrated in Fig. 6, the recorder 100 records in the HDD 140 the chapter information 51 related to a chapter automatically added, while recording in the flash memory 170 the chapter information 55 generated on the basis of the scene data received from the server 700. With this arrangement, the recorder 100 can execute skip playback on the basis of either one of the chapter information (first chapter information) related to a chapter automatically added and the chapter information (second chapter information) based on the scene data. Since the first chapter information and the second chapter information are recorded in different recording media, the recorder 100 can switch a type of chapter to be used upon execution of skip playback only by changing the recording medium to access.

When receiving error data indicating that there is no scene data, from the server 700, the recorder 100 according to the present embodiment switches a type of a warning screen to output depending on whether or not the time passed from a time at which program data is recorded is within the predetermined time (e.g. twenty-six hours). Consequently, the recorder 100 can accurately notify the user whether or not there is a possibility of allocating scene data in the future.

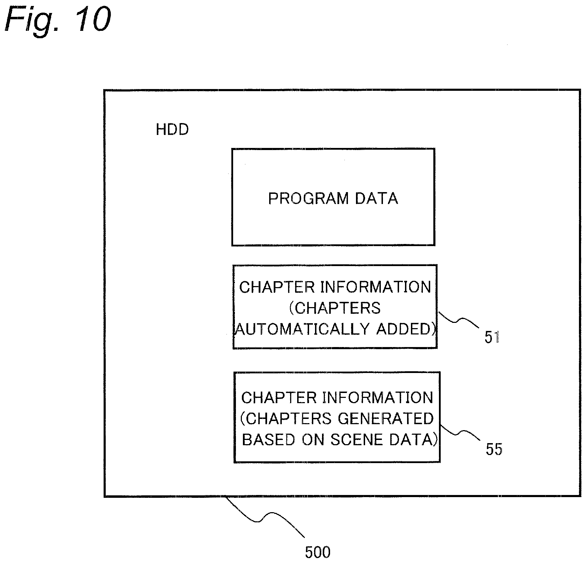

In the present embodiment, although the first chapter information for managing automatically added chapters and the second chapter information based on the scene data are recorded in the different recording media, the recording way of the first chapter and the second chapter are not limited to such a configuration. For example, as illustrated in Fig. 10, the first chapter information 51 and the second chapter information 55 may be recorded in the same recording medium (e.g. the HDD 500). In this case, respective pieces of chapter information need to be managed to enable distinction between the first chapter information and the second chapter information. For example, the first chapter information and the second chapter information may be configured by different tables. Further, in order to distinguish between the first chapter information and the second chapter information, the first and second chapter information may be managed by adding identifiers to the first chapter information and the second chapter information, respectively, and associating each identifier with program data.

### 1-6. Skip Playback Operation

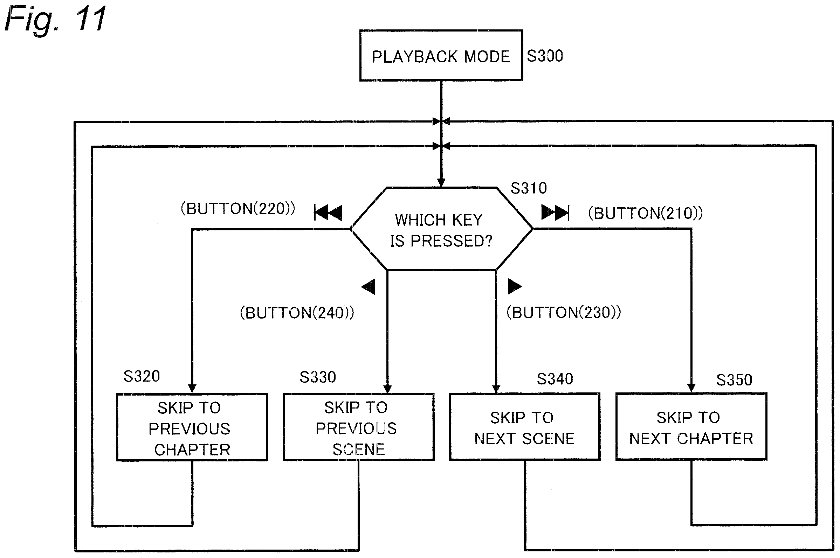

A skip playback operation in a scene playback mode of the recorder 100 will be described with reference to Fig. 11. Fig. 11 is a flowchart for explaining the skip playback operation in the scene playback mode using the remote controller 200.

When a playback operation in the scene playback mode is started in the recorder 100 (S300), the microcomputer 130 determines which one of the buttons 210 to 240 of the remote controller 200 is pressed by the user on the basis of a signal received through the remote control signal receiving unit 120 (S310).

When determining that the button 220 is pressed, the microcomputer 130 sets a playback position to a position of a chapter appearing first in a backward direction from the current playback position on the basis of the second chapter information stored in the HDD 140, and resumes playback from the set playback position (S320).

When determining that the button 240 is pressed, the microcomputer 130 sets a playback position to a position of a chapter (previous scene) appearing first in the backward direction from the current playback position on the basis of the first chapter information included in the scene data stored in the flash memory 170, and resumes playback from the set playback position (S330).

When determining that the signal indicates that the button 230 is pressed, the microcomputer 130 sets a playback position to a position of a chapter (next scene) appearing first in the forward direction from the current playback position, on the basis of the first chapter information included in the scene data stored in the flash memory 170, and resumes playback from the set playback position (S340).

When determining that the signal indicates that the button 210 is pressed, the microcomputer 130 sets a playback position to a position of a chapter appearing first in the forward direction from the current playback position, on the basis of the second chapter information stored in the HDD 140, and resumes playback from the set playback position (S350).

As described above, for the recorder 100 according to the present embodiment, a skip operation commanding function is added to each of buttons 210 to 240 of the remote controller 200. With this arrangement, the remote controller 200 can command the recorder 100 separately to execute skip playback based on the first chapter information (chapter automatically added) and to execute skip playback based on the second chapter information (chapter generated from scene data).

### 1-7. Effect, etc.

As described above, in the present embodiment, the recorder 100 has the recording media such as the HDD 150 and the flash memory 170, the microcomputer 130 which controls the operation of the recorder 100, and the wired LAN module 160 which communicates with the server. The microcomputer 130 detects time position in program data (moving image data) matching with the predetermined condition, adds a chapter to the detected time position, and generates the first chapter information 51 for managing the chapter. The microcomputer 130 receives from the external device through the wired LAN module 160 the scene data 53 in which the chapters indicating time positions are added for each scene of the moving image data. The microcomputer 130 records the first chapter information generated by the microcomputer 130 and the second chapter information generated on the basis of scene data received by the wired LAN module 160, respectively in the recording media. The first chapter information and the second chapter information are managed to be distinguishable therebetween. More specifically, the first chapter information and the second chapter information are respectively recorded in the different recording media (the HDD 500 and the flash memory 170) .

According to the above configuration, it is possible to distinguish between and refer to the first chapter information and the second chapter information even when the first chapter information and the second chapter information are recorded in the recorder 100.

Further, in the present embodiment, the recorder 100 has the microcomputer 130 which records program data in the HDD 140, and the LAN module 160 which communicates with the server 700. The microcomputer 130 transmits a request signal for requesting scene data in which a chapter indicating time position is added for each scene in relation to program data recorded in the HDD 140, to the server 700 through the LAN module 160. The microcomputer 130 receives a response signal to the request signal from the server 700 through the LAN module 160. The microcomputer 130 outputs image data indicating a message when the microcomputer 130 cannot receive scene data in response to the request signal from the server 700. The microcomputer 130 changes a message according to an elapsed time from a time at which program data is recorded in the recording medium.

In cases where scene data is generated within a predetermined time after a program corresponding to program data is broadcasted, according to the aforementioned configuration, it is possible to provide the user with information as to whether or not there is a possibility of adding scene data to the program data.

### Other Embodiments

The first embodiment has been described as an exemplary technique disclosed in the present application. However, the technique according to the present disclosure is not limited to this, and is also applicable to embodiments to which adequate changes, substitutions, additions and omissions are applied. Hereinafter, other embodiments will be described below.

Although a recorder has been described as an example of a recording device in the first embodiment, the idea of the present disclosure is applicable to arbitrary devices as long as the devices record program data and scene data.

Further, although a recorder 100 generates the second chapter information from the scene data received from the server 700 in the first embodiment, the recorder 100 may receive the scene data and the second chapter information from the server 700.

Furthermore, although an example where connection to the Internet is established through a wired LAN has been described in the first embodiment, the connection to the Internet may be established through a wireless LAN or another communication interface.

Moreover, although a HDD and a flash memory have been described as a recording medium which record the chapter information in the first embodiment, the recording medium is not limited to these. For example, an optical disk, such as DVD (Digital Versatile Disc) and BD (Blu-ray Disc), and/or a memory card having semiconductor memory elements inside may be used.

Further, in the first embodiment, the step S210 in Fig. 7 determines whether or not the program data to be played is broadcasted program data and unedited program data. However, performing determination is not necessarily limited to such a configuration. For example, it may be determined only whether or not the program data to be displayed is broadcasted program data. In this case, when the broadcasted program data has been edited, a request to transmit the scene data is sent to the server. Alternatively, it may be determined whether or not the program data to be played is broadcasted program data and program data obtained by combining plural pieces of program data. In this case, when the broadcasted program data is program data to which editing processing other than combining of plural pieces of program data is applied, such as partially deleting program data, a request to transmit the scene data is sent to the server.

As described above, the above embodiment has been described as the exemplary technique of the present disclosure. The accompanying drawings and the detailed description have been provided for the exemplary technique. Hence, the components disclosed in the accompanying drawings and the specification include not only components which are essential to solve the problem but also components which are not essential to solve the problem. Accordingly, even though the components which are not essential to solve the problem are disclosed in the accompanying drawings and the specification, the components which are not essential should not be immediately construed as essential.

Further, the above embodiments are provided for the exemplary technique of the present disclosure, and thus various changes, substitutions, additions and omissions are applicable to a scope of claims.

### Industrial Applicability

The present disclosure is applicable to a recording device such as a recorder or a television equipped with a video recording function.

## Claims

1. A recording device (100) for recording moving image data including data for a broadcasted program, that receives, from a server, scene data of the broadcasted program which is created within a predetermined time after the broadcasted program is broadcasted, the recording device comprising:
a recording unit that records the moving image data in a recording medium (140);
a transmitting unit that transmits a request signal for requesting the scene data to the server (700) when the moving image data is a broadcasted program data, the scene data being information in which a mark indicating a time position at which the scene changes is added for each of scenes in relation to the moving image data recorded in the recording medium (140);
a receiving unit that receives a response signal in response to the request signal from the server (700); the response signal including scene data or information indicating no scene data, and
an output unit (130) that outputs image data indicating a message when the receiving unit cannot receive the scene data in response to the request signal from the server (700),
wherein the message to be displayed is selected depending on:
(i) whether the moving image data is not a broadcasted program data, or
(ii) whether the moving image data is a broadcasted program data, and whether a predetermined time has passed from a time at which the moving image data was recorded by the recording unit

2. The recording device (100) according to claim 1, wherein while a scene playback mode is set, the transmitting unit transmits the request signal for requesting the scene data to the server (700), the receiving unit receives the response signal in response to the request signal from the server (700) when the moving image data is the broadcasted program data, and the output unit (130) outputs image data indicating the message when the receiving unit cannot receive the scene data in response to the request signal from the server;
wherein the scene playback mode refers to a playback mode of executing skip playback of the moving image data using the scene data.

3. A message display method of displaying a message in response to a response result when scene data related to moving image data of a broadcasted program is requested to a server (700), wherein the scene data is created within a predetermined time after the broadcasted program is broadcasted, the scene data is information in which a mark indicating a time position at which the scene changes is added for each of scenes of the moving image data, and the message display method comprises:
transmitting to the server (700) a request signal for requesting scene data related to specific moving image data recorded in a recording medium (140) when the specific moving image data is a broadcasted program data;
outputting image data indicating a message when the scene data in response to the request signal cannot be received from the server; and
changing the message according to
(i) whether the moving image data is not a broadcasted program data, or
(ii) whether the moving image data is a broadcasted program data, and whether a predetermined time has passed since the moving image data was last recorded in the recording medium (140).

4. The message display method according to claim 3, wherein the message display method is performed while a scene playback mode is set;
wherein the scene playback mode refers to a playback mode of executing skip playback of the moving image data using the scene data.

5. A computer program of controlling a recording device (100) which records scene data related to moving image data of a broadcasted program, wherein the scene data is created within a predetermined time after the broadcasted program is broadcasted, the scene data is information in which a mark indicating a time position at which the scene changes is added for each of scenes of the moving image data, and the computer program makes a controller of the recording device (100) execute:
a function of transmitting to a server (700) a request signal for requesting scene data related to specific moving image data recorded in a recording medium (140) when the specific moving image data is a broadcasted program data;
a function of outputting image data indicating a message when the scene data in response to the request signal cannot be received from the server (700); and
a function of changing the message according to
(i) whether the moving image data is not a broadcasted program data, or
(ii) whether the moving image data is a broadcasted program data, and whether a predetermined time has passed since the moving image data was last recorded in the recording medium (140).

## Patentansprüche

1. Aufzeichnungsvorrichtung (100) zum Aufzeichnen von Bewegtbild-Daten, einschließlich Daten für ein übertragenes Programm, welche von einem Server Szenendaten des übertragenen Programms empfängt, die innerhalb einer vorbestimmten Zeit nach dem Senden des übertragenen Programms erzeugt werden, wobei die Aufzeichnungsvorrichtung umfasst:
eine Aufzeichnungseinheit, die die Bewegtbild-Daten in einem Aufzeichnungsmedium (140) aufzeichnet;
eine Sendeeinheit, die ein Anforderungssignal zum Anfordern der Szenendaten an den Server (700) sendet, wenn die Bewegtbild-Daten übertragene Programmdaten sind, wobei die Szenendaten Informationen sind, bei denen für jede Szene eine Markierung, die eine Zeitposition angibt, an der sich die Szene ändert, in Bezug auf die auf dem Aufzeichnungsmedium (140) aufgezeichneten Bewegtbild-Daten hinzugefügt wird;
eine Empfangseinheit, die ein Antwortsignal als Reaktion auf das Anforderungssignal von dem Server (700) empfängt; wobei das Antwortsignal Szenendaten einschließt oder Informationen, die keine Szenendaten anzeigen, und
eine Ausgabeeinheit (130), die Bilddaten ausgibt, welche eine Nachricht anzeigen, wenn die Empfangseinheit die Szenendaten als Reaktion auf das Anforderungssignal vom Server (700) nicht empfangen kann,
wobei die anzuzeigende Nachricht ausgewählt wird, abhängig davon,
(i) ob es sich bei den Bewegtbild-Daten nicht um übertragene Programmdaten handelt, oder
(ii) ob die Bewegtbild-Daten übertragene Programmdaten sind und ob eine vorbestimmte Zeit seit dem Zeitpunkt vergangen ist, an dem die Bewegtbild-Daten von der Aufzeichnungseinheit aufgezeichnet wurden.

2. Aufzeichnungsvorrichtung (100) nach Anspruch 1, wobei, während ein Szenenwiedergabemodus eingestellt ist, die Sendeeinheit das Anforderungssignal zum Anfordern der Szenendaten an den Server (700) sendet, die Empfangseinheit das Antwortsignal als Reaktion auf das Anforderungssignal vom Server (700) empfängt, wenn die Bewegtbild-Daten die übertragenen Programmdaten sind, und die Ausgabeeinheit (130) Bilddaten ausgibt, welche die Nachricht anzeigen, wenn die Empfangseinheit die Szenendaten als Reaktion auf das Anforderungssignal vom Server nicht empfangen kann;
wobei sich der Szenenwiedergabemodus auf einen Wiedergabemodus bezieht, bei dem die übersprungene Wiedergabe der Bewegtbild-Daten unter Verwendung der Szenendaten ausgeführt wird.

3. Nachrichtenanzeigeverfahren zum Anzeigen einer Nachricht als Reaktion auf ein Antwortergebnis, wenn Szenendaten, die sich auf Bewegtbild-Daten eines übertragenen Programms beziehen, von einem Server (700) angefordert werden, wobei die Szenendaten innerhalb einer vorbestimmten Zeit nach dem Senden des übertragenen Programms erzeugt werden, die Szenendaten Informationen sind, bei denen für jede Szene der Bewegtbild-Daten eine Markierung, die eine Zeitposition angibt, an der sich die Szene ändert, hinzugefügt wird, und das Nachrichtenanzeigeverfahren umfasst:
Übertragen eines Anforderungssignals an den Server (700) zum Anfordern von Szenendaten in Bezug auf spezifische Bewegtbild-Daten, die in einem Aufzeichnungsmedium (140) aufgezeichnet sind, wenn die spezifischen Bewegtbild-Daten übertragene Programmdaten sind;
Ausgeben von Bilddaten, die eine Nachricht anzeigen, wenn die Szenendaten als Reaktion auf das Anforderungssignal nicht vom Server empfangen werden können; und
Ändern der Nachricht je nachdem,
(i) ob es sich bei den Bewegtbild-Daten nicht um übertragene Programmdaten handelt, oder
(ii) ob die Bewegtbild-Daten übertragene Programmdaten sind und ob eine vorbestimmte Zeit vergangen ist, seit die Bewegtbild-Daten zuletzt auf dem Aufzeichnungsmedium (140) aufgezeichnet wurden.

4. Nachrichtenanzeigeverfahren nach Anspruch 3, wobei das Nachrichtenanzeigeverfahren ausgeführt wird, während ein Szenenwiedergabemodus eingestellt ist;
wobei sich der Szenenwiedergabemodus auf einen Wiedergabemodus bezieht, bei dem die übersprungene Wiedergabe der Bewegtbild-Daten unter Verwendung der Szenendaten ausgeführt wird

5. Computerprogramm zum Steuern einer Aufzeichnungsvorrichtung (100), welche Szenendaten aufzeichnet, die sich auf Bewegtbild-Daten eines übertragenen Programms beziehen, wobei die Szenendaten innerhalb einer vorbestimmten Zeit nach dem Senden des übertragenen Programms erzeugt werden, wobei die Szenendaten Informationen sind, bei denen eine Markierung, die eine Zeitposition angibt, an der die Szenenwechsel vorgenommen werden, für jede der Szenen der Bewegtbild-Daten hinzugefügt wird, und das Computerprogramm eine Steuerung der Aufzeichnungsvorrichtung (100) Folgendes ausführen lässt:
eine Funktion zum Übertragen eines Anforderungssignals an einen Server (700) zum Anfordern von Szenendaten in Bezug auf spezifische Bewegtbild-Daten, die auf einem Aufzeichnungsmedium (140) aufgezeichnet sind, wenn die spezifischen Bewegtbild-Daten übertragene Programmdaten sind;
eine Funktion zum Ausgeben von Bilddaten, die eine Nachricht anzeigen, wenn die Szenendaten als Reaktion auf das Anforderungssignal nicht vom Server (700) empfangen werden können; und eine Funktion zum Ändern der Nachricht, je nachdem
ob es sich bei den Bewegtbild-Daten nicht um übertragene Programmdaten handelt, oder
(ii) ob die Bewegtbild-Daten übertragene Programmdaten sind und ob eine vorbestimmte Zeit vergangen ist, seit die Bewegtbild-Daten zuletzt auf dem Aufzeichnungsmedium (140) aufgezeichnet wurden.

## Revendications

1. Dispositif d'enregistrement (100) pour l'enregistrement de données d'images en mouvement incluant des données pour un programme diffusé, qui reçoit de la part d'un serveur des données scénographiques du programme diffusé qui est créé pendant une durée prédéterminée après la diffusion du programme diffusé, le dispositif d'enregistrement comprenant :
une unité d'enregistrement qui enregistre les données d'images en mouvement sur un support d'enregistrement (140) ;
une unité de transmission qui transmet un signal de requête pour demander les données scénographiques au serveur (700) lorsque les données d'images en mouvement sont des données de programme diffusé, les données scénographiques étant des informations dans lesquelles une marque indiquant une position horaire à laquelle la scène change est ajoutée pour chacune des scènes en lien avec les données d'images enregistrées sur le support d'enregistrement (140) ;
une unité de réception qui reçoit un signal de réponse en réponse au signal de requête de la part du serveur (700) ; le signal de réponse incluant des données scénographiques ou des informations indiquant l'absence de données scénographiques, et
une unité d'édition (130) qui édite des données d'images en indiquant un message lorsque l'unité de réception ne peut pas recevoir les données scénographiques en réponse au signal de requête provenant du serveur (700),
le message à afficher étant sélectionné en fonction des critères suivants :
(i) si les données d'images en mouvement ne sont pas des données de programme diffusé, ou
(ii) si les données d'images en mouvement sont des données de programme diffusé et si une durée prédéterminée s'est écoulée depuis une heure à laquelle les données d'images en mouvement ont été enregistrées par l'unité d'enregistrement.

2. Dispositif d'enregistrement (100) selon la revendication 1, dans lequel, pendant qu'un mode play-back de scène est établi, l'unité de transmission transmet le signal de requête pour demander les données scénographiques au serveur (700), l'unité de réception reçoit le signal de réponse en réponse au signal de requête de la part du serveur (700) lorsque les données d'images en mouvement sont les données de programme diffusé, et l'unité d'édition (130) édite des données d'images en indiquant le message lorsque l'unité de réception ne peut pas recevoir les données scénographiques en réponse au signal de requête provenant du serveur ;
le mode play-back de scène se référant à un mode play-back d'exécution d'un play-back à sauts des données d'images en mouvement en utilisant les données scénographiques.

3. Procédé d'affichage de message pour l'affichage d'un message en réponse à un résultat de réponse lorsque des données scénographiques concernant des données d'images en mouvement d'un programme diffusé sont demandées à un serveur (700), les données scénographiques étant créées dans une période prédéterminée après la diffusion du programme diffusé, les données scénographiques étant des informations dans lesquelles une marque indiquant une position horaire à laquelle la scène change est ajoutée pour chacune des scènes des données d'images en mouvement, et le procédé d'affichage de message comprend :
la transmission au serveur (700) d'un signal de requête pour demander des données scénographiques relatives à des données d'images en mouvement spécifiques enregistrées sur un support d'enregistrement (140) lorsque les données d'images en mouvement spécifiques sont des données de programme diffusé ;
l'édition de données d'images indiquant un message lorsque les données scénographiques en réponse au signal de requête ne peuvent pas être reçues en provenance du serveur ; et
le changement du message en fonction des critères suivants :
(i) si les données d'images en mouvement ne sont pas des données de programme diffusé,
(ii) si les données d'images en mouvement sont des données de programme diffusé, et si une durée prédéterminée s'est écoulée depuis que les données d'images en mouvement ont été enregistrées pour la dernière fois sur le support d'enregistrement (140).

4. Procédé d'affichage de message selon la revendication 3, ce procédé d'affichage de messages étant réalisé pendant qu'un mode play-back de scène est établi ;
le mode play-back de scène se référant à un mode play-back d'exécution d'un play-back à sauts des données d'images en mouvement en utilisant les données scénographiques.

5. Programme informatique de commande d'un dispositif d'enregistrement (100) qui enregistre des données scénographiques relatives à des données d'images en mouvement d'un programme diffusé, les données scénographiques étant créées pendant une période prédéterminée après la diffusion du programme diffusé, les données scénographiques étant des informations dans lesquelles une marque indiquant une position horaire à laquelle les données scénographiques changent est ajoutée pour chacune des scènes des données d'images en mouvement, et le programme informatique amène une commande du dispositif d'enregistrement (100) à exécuter :
une fonction de transmission à un serveur (700) d'un signal de requête pour demander des données scénographiques relatives à des données d'images en mouvement spécifiques enregistrées sur un support d'enregistrement (140) lorsque les données d'images en mouvement spécifiques sont les données de programme diffusé ;
une fonction d'édition de données d'images indiquant un message lorsque les données scénographiques en réponse au signal de requête ne peuvent pas être reçues en provenance du serveur (700) ; et
une fonction de changement du message en fonction des critères suivants :
(i) si les données d'images en mouvement ne sont pas des données de programme diffusé, ou
(ii) si les données d'images en mouvement sont des données de programme diffusé, et si une durée prédéterminée s'est écoulée depuis que les données d'images en mouvement ont été enregistrées pour la dernière fois sur le support d'enregistrement (140).
